# EUROPÄISCHE PATENTSCHRIFT

(11) **EP 1 350 690 B1**
(45) Veröffentlichungstag und Bekanntmachung des Hinweises auf die Patenterteilung: **14.09.2011**
(21) Anmeldenummer: 03090065.8
(22) Anmeldetag: 14.03.2003
(51) Int. Cl.: B60R 21/20

(54) **Airbagmodul mit elastisch gelagertem Gasgenerator**
Airbag module with elastically mounted gas generator
Module de sac à gaz avec générateur de gaz monté de manière élastique

(30) Priorität: 03.04.2002 DE 10215330
(43) Veröffentlichungstag der Anmeldung: 08.10.2003
(73) Patentinhaber: Takata-Petri AG, 63743 Aschaffenburg (DE)
(72) Erfinder: Grossmann, Uwe, 63739 Aschaffenburg (DE); Müller, Norbert, 63743 Aschaffenburg (DE)
(74) Vertreter: Baumgärtel, Gunnar

(56) Entgegenhaltungen:
- EP-A- 1 101 663
- EP-B- 0 932 526
- DE-A- 10 110 912
- DE-U- 20 105 733
- US-A- 5 826 901

## Beschreibung

Die Erfindung betrifft ein Airbagmodul mit elastisch gelagertem Gasgenerator nach dem Oberbegriff des Anspruchs 1.

Airbagmodule mit elastisch gelagerten Gasgeneratoren werden vorzugsweise in Lenkrädern vorgesehen, um die Vibrationsneigung des Lenkrades zu verringern. Durch die elastische Lagerung des Gasgenerators wird eine Schwingungsentkopplung gegenüber dem Lenkrad erreicht. Bei entsprechender Dimensionierung des Gasgenerators kann dieser auch als Schwingungstilger dienen.

Neben Airbagmodulen, bei denen im Bereich der Befestigungsschrauben des Gasgenerators elastische Buchsen vorgesehen sind (EP 1 020 332), ist ein Airbagmodul bekannt, bei dem der Gasgenerator durch elastische Elemente gehalten ist, ohne daß in deren Bereich Verschraubungen vorgesehen sind (DE 201 08 594 U1). Bei diesem Airbagmodul ist als elastisches Element ein im Querschnitt geschlossenes Hohlprofil mit einer Umfangswand vorgesehen, deren radiale Außenseite einerseits am Gasgenerator und andererseits an einem modulseitigen Halteteil anliegt.

Eine Halterung wird in einer Ausführungsform dadurch erreicht, daß der Gasgenerator einen Halteflansch hat, an dessen Ober- und dessen Unterseite jeweils ein elastisches Element anliegt und daß die elastischen Elemente durch Halteteile gegeneinander gedrückt werden.

In einer zweiten Ausführungsform wird die Halterung dadurch erreicht, daß der Gasgenerator einen Halteflansch hat und sich das elastische Element von dessen Oberseite und am Umfangsrand entlang bis zu dessen Unterseite erstreckt und daß das elastische Element durch Halteteile gegen die Oberund die Unterseite gedrückt wird.

Ein Gattungsgemäßes Airbagmodul ist aus der EP 1 101 663 A2 bekannt.

Ein Nachteil dieses Gassackmoduls besteht darin, daß ein stufenförmiger Diffusor vorgesehen werden muß, um eine Anlagefläche für das obere elastische Element bzw. den oberen Bereich des einteiligen elastischen Elements zu haben. Ein solcher Diffusor ist aber im Vergleich zu einem zylindrischen Diffusor schwerer herzustellen und außerdem ergeben sich Bauraumverluste für den Gassack. Ein weiterer Nachteil besteht darin, daß die ringförmigen elastischen Elemente nicht fixierbar sind.

Der Erfindung liegt die Aufgabe zugrunde, eine leicht montierbare elastische Lagerung des Gasgenerators so auszubilden, daß sie unabhängig von der Form des Diffusors oder eines anderen den Gasgenerator umgebenden Gehäuses anwendbar ist.

Erfindungsgemäß wird das gemäß den Merkmalen des Anspruchs 1 erreicht.

Bei einem Airbagmodul mit elastisch gelagertem Gasgenerator, mit Gassack und mit Abdeckung gegenüber dem Fahrgastraum, insbesondere für Lenkräder, wird das erfindungsgemäß dadurch erreicht, daß der Gasgenerator mittels mindestens einer elastischen Baugruppe gelagert ist, die mindestens ein Halteelement aufweist, das schräg nach oben, d.h., schräg in Richtung der Abdeckung verläuft und mindestens ein Haltelement aufweist, das schräg nach unten, d.h. schräg in die der vorgenannten Richtung entgegengesetzte Richtung verläuft, und daß beide Halteelemente am Gasgenerator bzw. an einem dem Gasgenerator zugeordneten Abschnitt des Airbagmoduls befestigt sind und an der jeweils anderen Baugruppe, d.h. am zugeordneten Abschnitt des Airbagmoduls bzw. am Gasgenerator, anliegen.

Der Vorteil dieser Anordnung besteht darin, daß sie bei einem üblichen Diffusor mit einer zylindrischen Wand einsetzbar ist, wobei die leichte Montierbarkeit gewährleistet ist. Dieser Diffusor ist leichter herstellbar als ein stufenförmiger Diffusor. Es entstehen kein Bauraum- und Faltverluste für den Gassack. Diese Anordnung ermöglicht auch eine flache Bauweise des Airbagmoduls.

Es können mehrere segmentartige elastische Baugruppen vorgesehen sein, die im gleichen Winkelabstand zueinander angeordnet sind. Bei der Verwendung mehrerer elastischer Baugruppen ist es zweckmäßig, mindestens drei elastische Baugruppen anzuordnen.

Es ist aber auch möglich, eine ringförmige elastische Baugruppe vorzusehen. Eine solche Ausführung gewährleistet zusätzlich die Abdichtung zwischen dem Gasgenerator und dem umgebenden Gehäuse, so daß kein Gas im Bereich der Halterung des Gasgenerators aus dem Airbagmodul austreten kann.

Die Halteelemente weisen vorzugsweise einen fingerförmigen Querschnitt auf.

In einer ersten Ausführungsform weist die elastische Baugruppe die Querschnittsform eines Y auf, wobei die schräg verlaufenden Zweige des Y die Halteelemente darstellen, die anliegen, während die Halteelemente mittels des üblicherweise senkrechten Abschnitts des Y am Gasgenerator oder an einem anderen Bauteil des Airbagmoduls befestigt sind.

Vorzugsweise ist die elastische Baugruppe im unteren Teil des Gasgenerators angeordnet, wobei der untere, üblicherweise senkrechte Abschnitt des Y in der Ebene eines Generatorträgers oder parallel zu dieser Ebene verläuft, wobei ein schräger Abschnitt des Y das schräg nach oben verlaufende Halteelement ist und wobei der andere schräge Abschnitt des Y das schräg nach unten verlaufende Halteelement ist. Die elastische Baugruppe weist also einen Querschnitt eines liegenden Y auf.

In einer bevorzugten Ausführungsform greift das schräg nach oben verlaufende Halteelement in eine Vertiefung des Generatorträgers ein und das schräg nach unten verlaufende Halteelement in eine Vertiefung einer mit dem Generatorträger verbundenen Halteplatte ein. Bei dieser Ausführungsform ist die elastische Baugruppe unterhalb des Diffusorgehäuses angeordnet, so daß dieses unabhängig von der Gasgeneratorbefestigung gestaltet werden kann.

Es ist zweckmäßig, daß die elastische Baugruppe an mindestens einem mit dem Gasgenerator verbundenen Flansch befestigt ist. Dieser Flansch kann das Gasgeneratorgehäuse ringförmig umgeben oder bei Verwendung mehrerer segmentförmiger elastischer Baugruppen können auch entsprechende Flanschsegmente vorgesehen sein.

Die elastische Baugruppe besteht vorzugsweise aus Kautschuk oder Silikon und ist am Gasgenerator und/oder an dem mit diesem verbundenen Flansch angespritzt.

In einer weiteren Ausführungsform ist die elastische Baugruppe mit dem Generatorträger verbunden und die schräg verlaufenden Zweige des Y greifen in mindestens eine Ausnehmung am Gasgenerator ein. Auch bei dieser Ausführungsform ist es zweckmäßig, daß die elastische Baugruppe einen Querschnitt eines liegenden Y aufweist.

In einer weiteren Ausführungsform ist vorgesehen, daß mindestens ein Halteelement im oberen und unteren Bereich des Gasgenerators vorgesehen ist. Die Halteelemente sind bei dieser Ausführungsform am Gasgenerator befestigt, wobei das im oberen Bereich des Gasgenerators angeordnete Halteelement an einem den Gasgenerator umgebenden Gehäuse anliegt und wobei das im unteren Bereich des Gasgenerators angeordnete Halteelement am Gehäuse und an einer Halteplatte anliegt. Als Gehäuse ist insbesondere ein Diffusorgehäuse vorgesehen. Vorzugsweise ist die elastische Baugruppe so ausgebildet, daß sie über den Gasgenerator stülpbar ist, d.h., sie weist die Form einer Haube auf, in die Halteelemente integriert sind. Bei dieser Ausführungsform ergibt sich der weitere Vorteil, daß der Gasgenerator ohne Flansch ausgeführt werden kann.

Da bei dieser Art der elastischen Lagerung des Gasgenerators keine leitende Verbindung zwischen diesem und anderen Fahrzeugteilen besteht, d.h., der Gasgenerator nicht mehr geerdet ist, wird zu dessen Erdung zwischen diesem und Masse ein flexibles Erdungskabel angeordnet.

Die Erfindung soll in Ausführungsbeispielen anhand von Zeichnungen erläutert werden. Es zeigen:
- Fig. 1: einen Schnitt durch eine erste Ausführungsform eines Airbagmoduls für ein Lenkrad;
- Fig. 2: die Einzelheit Z aus der Fig. 1;
- Fig. 3: eine perspektivische Ansicht des Gasgenerators mit mehreren an dessen Umfang angebrachten Halteelementen;
- Fig. 4: eine perspektivische Ansicht des Gasgenerators mit ringförmiger elastischer Baugruppe;
- Fig. 5: einen Schnitt durch eine zweite Ausführungsform des Airbagmoduls mit unten und oben am Gasgenerator angebrachten Halteelementen;
- Fig. 6: einen Schnitt durch eine dritte Ausführungsform des Airbagmoduls mit elastischen Halteelementen für den Gasgenerator, die an der Diffusorhalterung befestigt sind.
- Fig. 7: die Einzelheit E aus der Fig. 6

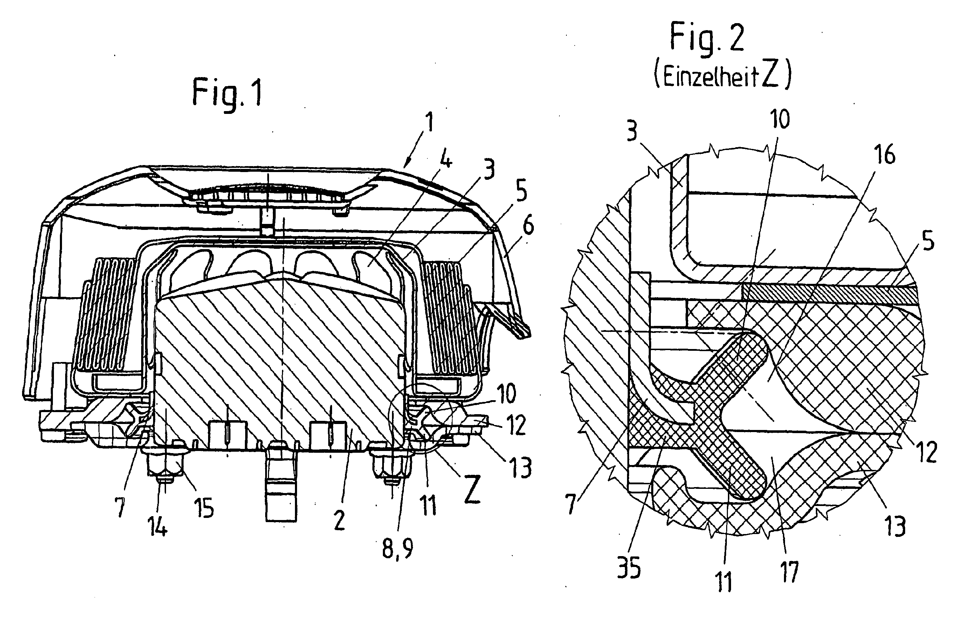

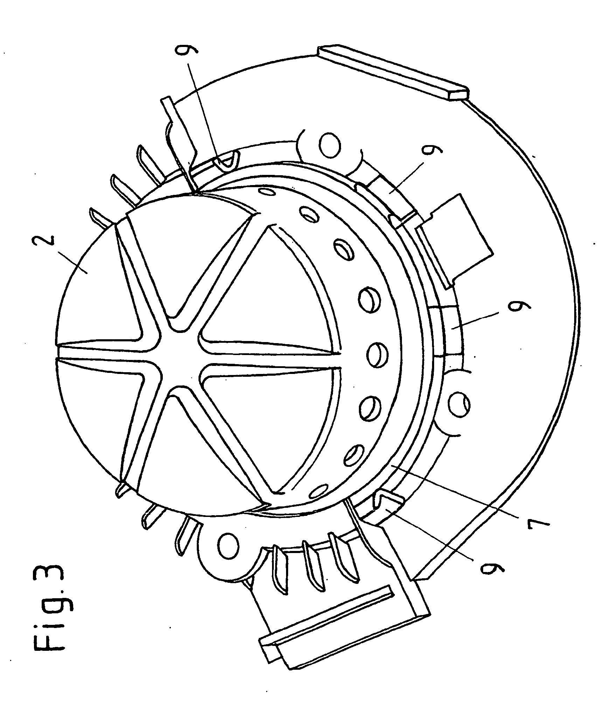

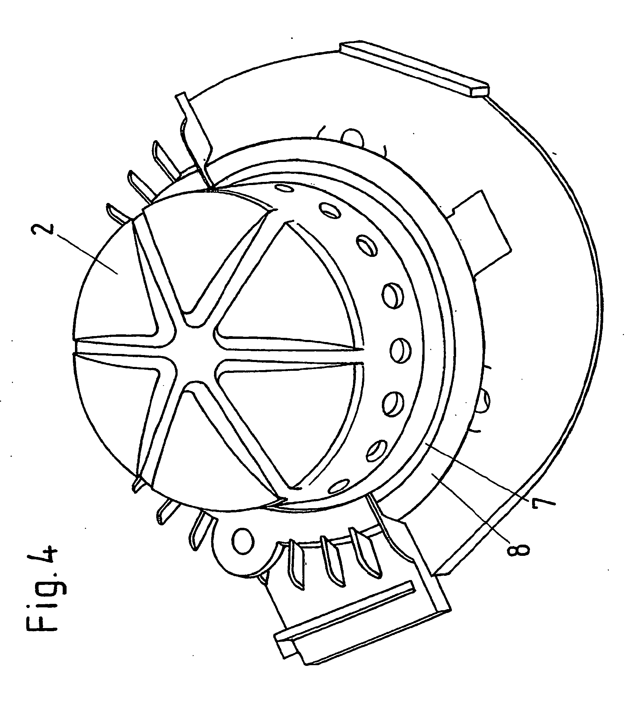

In der Fig. 1 ist ein Airbagmodul 1 dargestellt, das einen topfförmigen Gasgenerator 2, ein Diffusorgehäuse 3 mit Durchbrüchen 4 für den Austritt der Gasgeneratorgase, einen Gassack 5 und eine Abdeckkappe 6 aufweist. Der Gasgenerator ist in seinem unteren Abschnitt elastisch gelagert. Hierzu weist er einen ringförmigen Flansch 7 auf an den eine ringförmige elastische Baugruppe 8 (Fig. 4) oder mehrere segmentartige elastische Baugruppen 9 (Fig. 3), z.B. aus Silikon, angespritzt sind. Für die Befestigung der segmentartigen elastischen Baugruppen können anstelle der ringförmigen Flansches 7 auch Flanschsegmente im Bereich der elastischen Baugruppen angeordnet sein.

Die elastischen Baugruppen haben die Querschnittsform eines liegenden Y, mit einem schräg nach oben, d.h., schräg in Richtung der Abdeckkappe 6 verlaufenden oberen Halteelement 10 und mit einem schräg nach unten, d.h., schräg in die zur oben genannten Richtung entgegengesetzte Richtung verlaufenden unteren Halteelement 11. Die Halteelemente weisen einen fingerförmigen Querschnitt auf. Das Diffusorgehäuse 3 ist an einem Generatorträger 12 befestigt, an den von unten eine Halteplatte 13 angebracht ist. Alle drei Teile 3, 12 und 13 werden in einem Arbeitsgang durch Bolzen 14 und Muttern 15 miteinander verbunden.

Der Generatorträger 12 weist eine Vertiefung 16 auf, in die das obere Halteelement 10 eingreift. Die Halteplatte 13 weist eine Vertiefung 17 auf, in die das untere Halteelement 11 eingreift. Bei der Montage der Teile 3, 12 und 13 wird das obere Halteelement 10 an den Generatorträger 12 und das untere Halteelement 11 an die Halteplatte 13 gedrückt, wodurch eine sichere elastische Befestigung des Gasgenerators erzielt wird.

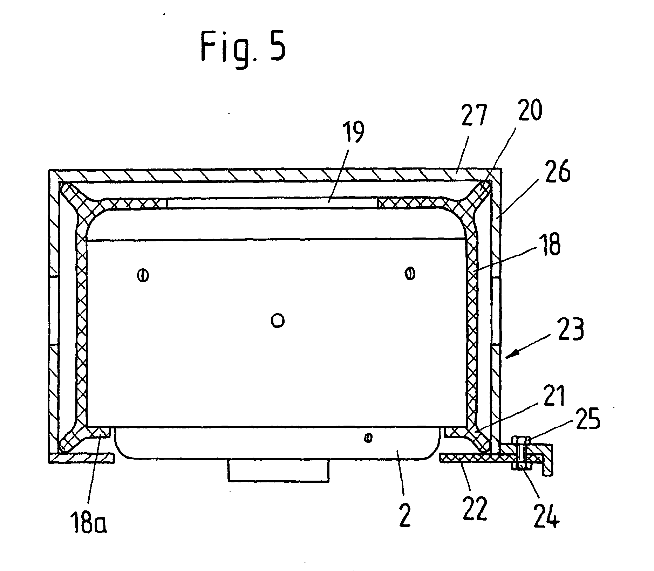

Bei der Ausführungsform der Fig. 5 weist der Gasgenerator 2 eine elastische Baugruppe 18 auf, die die Form einer Haube hat und über den Gasgenerator gestülpt ist. Die Baugruppe 18 umgreift den Gasgenerator unten mit einem Abschnitt 18a, so daß sie sicher mit dem Gasgenerator verbunden ist. Diese Baugruppe 18 weist mindestens eine Öffnung 19 für den Austritt der Gase nach Zündung des Gasgenerators 2 auf. Die Baugruppe 18 weist im unteren Abschnitt ein Halteelement 21 auf, das schräg nach unten verläuft, einen fingerartigen Querschnitt hat und den Gasgenerator 2 ringförmig umgibt. Im oberen Abschnitt weist das Bauteil 18 ein Halteelement 20 auf, das schräg nach oben verläuft, einen fingerartigen Querschnitt hat und den Gasgenerator 2 ebenfalls ringförmig umgibt. Anstelle der ringförmigen Halteelemente 20, 21 können auch segmentartige Halteelemente vorgesehen sein, die im gleichen Winkelabstand an der Baugruppe 18 angeordnet sind. Diese segmentartigen Halteelemente sind nicht gesondert dargestellt worden, da die Baugruppe 18 in diesem Fall im Bereich der Segmente den gleichen Querschnitt aufweist, wie er in der Fig. 5 dargestellt ist.

Die Halteelemente 20, 21 wirken mit einer Halteplatte 22 und einem Diffusorgehäuse 23 zusammen, die durch Bolzen 24 und Muttern 25 miteinander verbunden sind. Bei der Montage wird der mit der Baugruppe 18 versehene Gasgenerator 2 auf die Halteplatte 22 gestellt und anschließend wird das Diffusorgehäuse 23 aufgesetzt. Nach dem Verbinden des Diffusorgehäuses 23 mit der Halteplatte 22 wird das Halteelement 21 gegen diese und gegen die Seitenwnad 26 des Diffusorgehäuses 23 gedrückt, während das Halteelement 20 gegen die Seitenwand 26 und die obere Wand 27 des Diffusorgehäuses 23 gedrückt wird. Damit ist der Gasgenerator 2 sicher elastisch gelagert.

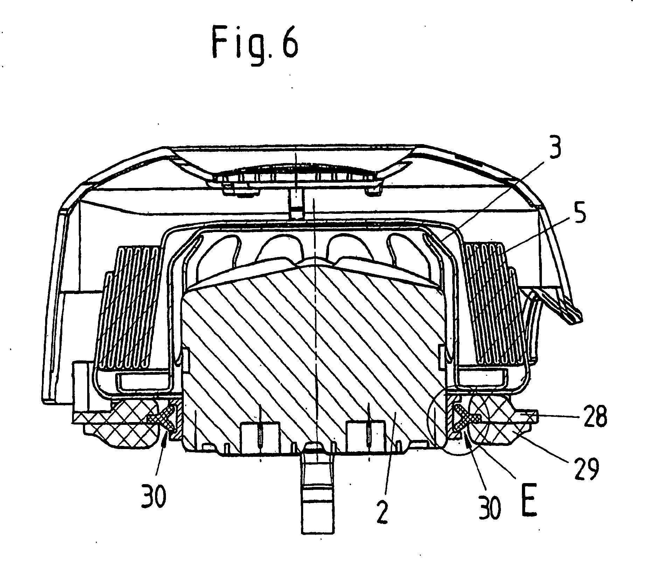

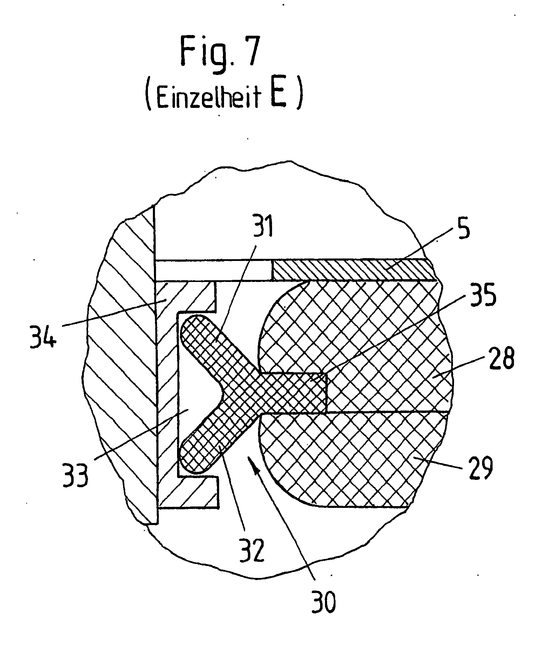

Beim Ausführungsbeispiel der Fig. 6 sind die elastischen Baugruppen nicht wie bei den vorhergehenden Ausführungsbeispielen am Gasgenerator sondern zwischen einem Generatorträger 28 und einer Halteplatte 29 befestigt. Es sind vier segmentartige elastische Baugruppen vorgesehen, von denen in der Fig. 6 zwei Baugruppen 30 erkennbar sind, die die Querschnittsform eines liegenden Y haben. Jede elastische Baugruppe 30 weist ein oberes, schräg nach oben ausgerichtetes Halteelement 31 und ein unteres, schräg nach unten ausgerichtetes Halteelement 32 auf (Fig. 7). Die Halteelemente 31, 32 greifen in eine Ausnehmung 33 eines am Gasgenerator 2 befestigten Halteteils 34 ein. Die elastische Baugruppen weisen weiterhin einen Abschnitt 35 auf, mit dem sie zwischen dem Generatorträger 28 und der Halteplatte 29 befestigt sind.

Bei der Montage wird der Gasgenerator 2 mit den elastischen Baugruppen 30 auf die Halteplatte 29 aufgesetzt. Anschließend werden der Generatorträger 28 und das Diffusorgehäuse 3 unter Zwischenlage des unteren Abschnitts des Gassacks 5 aufgesetzt und mit der Halteplatte 29 mittels nicht dargestellter Schrauben und Muttern verbunden. Damit sind die elastischen Baugruppen 30 fest zwischen dem Generatorträger 28 und der Halteplatte 29 verankert und die Halteelemente 31 und 32 sind in der Ausnehmung 33 fest an das Halteteil 34 gedrückt.

## Patentansprüche

1. Airbagmodul, insbesondere für Lenkräder, mit
- einem elastisch gelagerten Gasgenerator (2),
- einem Gassack (5),
- einer Abdeckung (6) gegenüber dem Fahrgastraum, und
- mindestens einer elastischen Baugruppe (8, 9, 18, 30), mittels der der Gasgenerator (2) gelagert ist und und die mindestens ein Halteelement (10, 20, 31,) aufweist,
**dadurch gekennzeichnet,**
**dass** die elastische Baugruppe
- mindestens ein Halteelement (10, 20, 31,) aufweist, das schräg nach oben, d.h. schräg in Richtung der Abdeckung (6) verläuft, und
- mindestens ein Haltelement (11, 21, 32) aufweist, das schräg nach unten, d.h. schräg zur der der Richtung der Abdeckung (6) entgegengesetzten Richtung verläuft, wobei
- beide Halteelemente (10, 11; 20, 21; 31, 32) am Gasgenerator (2) oder an einem dem Gasgenerator (2) zugeordneten Abschnitt des Airbagmoduls (28, 29) befestigt sind und an der jeweils anderen Baugruppe, d.h. am zugeordneten Abschnitt des Airbagmoduls (12, 13) bzw. am Gasgenerator (2), permanent anliegen.

2. Airbagmodul nach Anspruch 1, **dadurch gekennzeichnet, daß** mehrere segmentartige elastische Baugruppen (9) vorgesehen sind.

3. Airbagmodul nach Anspruch 1 oder 2, **dadurch gekennzeichnet, daß** mindestens drei elastische Baugruppen (9) vorgesehen sind.

4. Airbagmodul nach Anspruch 2 oder 3, **dadurch gekennzeichnet, daß** die elastischen Baugruppen (9) im gleichen Winkelabstand zueinander angeordnet sind.

5. Airbagmodul nach Anspruch 1, **dadurch gekennzeichnet, daß** eine ringförmige elastische Baugruppe (8) vorgesehen ist.

6. Airbagmodul nach mindestens einem der vorhergehenden Ansprüche, **dadurch gekennzeichnet, daß** die Halteelemente (10, 11, 20, 21, 31, 32) einen fingerförmigen Querschnitt aufweisen.

7. Airbagmodul nach mindestens einem der vorhergehenden Ansprüche, **dadurch gekennzeichnet, daß** die elastische Baugruppe (8, 9, 30) die Querschnittsform eines Y aufweist, wobei die schräg verlaufenden Zweige des Y die Halteelemente (10, 11, 31, 32) darstellen.

8. Airbagmodul nach Anspruch 7, **dadurch gekennzeichnet, daß** die elastische Baugruppe (8, 9, 30) im unteren Teil des Gasgenerators (2) angeordnet ist, wobei der untere, üblicherweise senkrechte Abschnitt (35) des Y in der Ebene eines Generatorträgers (12, 28) oder parallel zu dieser Ebene verläuft, wobei ein schräger Abschnitt des Y das schräg nach oben verlaufende Halteelement (10, 31) ist und wobei der andere schräge Abschnitt des Y das schräg nach unten verlaufende Halteelement (11, 32) ist.

9. Airbagmodul nach mindestens einem der vorhergehenden Ansprüche, **dadurch gekennzeichnet, daß** das schräg nach oben verlaufende Halteelement (10) in eine Vertiefung (16) des Generatorträgers (12) eingreift und das schräg nach unten verlaufende Halteelement (11) in eine Vertiefung (17) einer mit dem Generatorträger (12) verbundenen Halteplatte (13) eingreift.

10. Airbagmodul nach mindestens einem der vorhergehenden Ansprüche, **dadurch gekennzeichnet, daß** die elastische Baugruppe (8, 9) an mindestens einem mit dem Gasgenerator (2) verbundenen Flansch (7) befestigt ist.

11. Airbagmodul nach mindestens einem der vorhergehenden Ansprüche, **dadurch gekennzeichnet, daß** die elastische Baugruppe (8, 9, 18, 30) aus Kautschuk oder Silikon besteht.

12. Airbagmodul nach mindestens einem der vorhergehenden Ansprüche, **dadurch gekennzeichnet, dass** die elastische Baugruppe (8, 9) am Gasgenerator (2) und/oder an dem mit diesem verbundenen Flansch (7) angespritzt ist.

13. Airbagmodul nach Anspruch 7 oder 8, **dadurch gekennzeichnet, daß** die elastische Baugruppe (30) mit dem Generatorträger (28) verbunden ist und daß die schräg verlaufenden Zweige (31, 32) des Y in mindestens eine Ausnehmung (33) am Gasgenerator (2) eingreifen.

14. Airbagmodul nach mindestens einem der Ansprüche 1 bis 6 und 11, **dadurch gekennzeichnet, daß** mindestens ein Halteelement (20, 21) im oberen und unteren Bereich des Gasgenerators (2) vorgesehen ist.

15. Airbagmodul nach mindestens einem der Ansprüche 1 bis 6 sowie 11 und 14, **dadurch gekennzeichnet, daß** die Halteelemente (20, 21) am Gasgenerator befestigt sind, daß das im oberen Bereich des Gasgenerators angeordnete Halteelement an einem den Gasgenerator (2) umgebenden Gehäuse (26, 27) anliegt und daß das im unteren Bereich des Gasgenerators angeordnete Halteelement (21) am Gehäuse (26) und an einer Halteplatte (22) anliegt.

16. Airbagmodul nach mindestens einem der Ansprüche 1 bis 6, 11, 14 und 15, **dadurch gekennzeichnet, daß** als Gehäuse ein Diffusorgehäuse (23) vorgesehen ist.

17. Airbagmodul nach mindestens einem der Ansprüche 1 bis 6, 11, 14, 15 und 16, **dadurch gekennzeichnet, daß** die elastische Baugruppe (18) über den Gasgenerator (2) stülpbar ist.

18. Airbagmodul nach mindestens einem der vorhergehenden Ansprüche, **dadurch gekennzeichnet, daß** zwischen dem Gasgenerator (2) und einer mit dem Kraftfahrzeug verbundenen metallischen Baugruppe ein flexibles Erdungskabel angeordnet ist.

## Claims

1. An airbag module, in particular for steering wheels, comprising
- an elastically mounted gas generator (2),
- an airbag (5),
- a covering (6) facing the passenger compartment, and
- at least one elastic subassembly (8, 9, 18, 30), by means of which the gas generator (2) is mounted and which has at least one retaining element (10, 20, 31),
**characterized**
**in that** the elastic subassembly (8, 9, 18, 30)
- has at least one retaining element (10, 20, 31) running obliquely upward, i.e. obliquely in the direction of the covering (6), and
- has at least one retaining element (11, 21, 32) running obliquely downward, i.e. obliquely in the direction opposed to the direction of the covering (6), wherein
- the two retaining elements (10, 11; 20, 21; 31, 32) are fastened to the gas generator (2) or to a section of the airbag module (28, 29), which section is assigned to the gas generator (2), and rest permanently on the respectively other subassembly, i.e. on the associated section of the airbag module (12, 13) or on the gas generator (2).

2. The airbag module as claimed in claim 1, **characterized in that** a plurality of segmentlike, elastic subassemblies (9) are provided.

3. The airbag module as claimed in claim 1 or 2, **characterized in that** at least three elastic subassemblies (9) are provided.

4. The airbag module as claimed in claim 2 or 3, **characterized in that** the elastic subassemblies (9) are arranged at the same angular spacing from one another.

5. The airbag module as claimed in claim 1, **characterized in that** an annular, elastic subassembly (8) is provided.

6. The airbag module as claimed in at least one of the preceding claims, **characterized in that** the retaining elements (10, 11, 20, 21, 31, 32) have a fingershaped cross section.

7. The airbag module as claimed in at least one of the preceding claims, **characterized in that** the elastic subassembly (8, 9, 30) has the crosssectional shape of a Y where the obliquely running branches of the Y constitute the retaining elements (10, 11, 31, 32).

8. The airbag module as claimed in claim 7, **characterized in that** the elastic subassembly (8, 9, 30) is arranged in the lower part of the gas generator (2), the lower, conventionally vertical section (35) of the Y running in the plane of a generator carrier (12, 28) or parallel to this plane, an oblique section of the Y being the retaining element (10, 31) which runs obliquely upward, and the other, oblique section of the Y being the retaining element (11, 32) which runs obliquely downward.

9. The airbag module as claimed in at least one of the preceding claims, **characterized in that** the retaining element (10) which runs obliquely upward engages in a depression (16) of the generator carrier (12) and the retaining element (11) which runs obliquely downward engages in a depression (17) of a retaining plate (13) connected to the generator carrier (12).

10. The airbag module as claimed in at least one of the preceding claims, **characterized in that** the elastic subassembly (8, 9) is fastened to at least one flange (7) connected to the gas generator (2).

11. The airbag module as claimed in at least one of the preceding claims, **characterized in that** the elastic subassembly (8, 9, 18, 30) consists of rubber or silicone.

12. The airbag module as claimed in at least one of the preceding claims, **characterized in that** the elastic subassembly (8, 9) is injection molded onto the gas generator (2) and/or onto the flange (7) connected to the latter.

13. The airbag module as claimed in claim 7 or 8, **characterized in that** the elastic subassembly (30) is connected to the generator carrier (28), and wherein the obliquely running branches (31, 32) of the Y engage in at least one recess (33) on the gas generator (2).

14. The airbag module as claimed in at least one of claims 1 to 6 and 11, **characterized in that** at least one retaining element (20, 21) is provided in the upper and lower regions of the gas generator (2).

15. The airbag module as claimed in at least one of claims 1 to 6 and 11 and 14, **characterized in that** the retaining elements (20, 21) are fastened to the gas generator, wherein the retaining element arranged in the upper region of the gas generator rests on a housing (26, 27) surrounding the gas generator (2), and wherein the retaining element (21) arranged in the lower region of the gas generator rests on the housing (26) and on a retaining plate (22).

16. The airbag module as claimed in at least one of claims 1 to 6, 11, 14 and 15, **characterized in that** a diffuser housing (23) is provided as the housing.

17. The airbag module as claimed in at least one of claims 1 to 6, 11, 14, 15 and 16, **characterized in that** the elastic subassembly (18) can be pulled over the gas generator (2).

18. The airbag module as claimed in at least one of the preceding claims, **characterized in that** a flexible grounding cable is arranged between the gas generator (2) and a metallic subassembly connected to the motor vehicle.

## Revendications

1. Module d'airbag, en particulier pour volant de direction, comprenant
- un générateur de gaz monté élastiquement (2),
- un coussin gonflable (5),
- un couvercle (6) vis-à-vis de l'habitacle, et
- au moins un groupe structurel élastique (8, 9, 18, 30), au moyen duquel le générateur de gaz (2) est monté et qui comprend au moins un élément de maintien (10, 20, 31),
**caractérisé en ce que**
le groupe structurel élastique
- comprend au moins un élément de maintien (10, 20, 31), qui s'étend en oblique vers le haut, c'est-à-dire en oblique dans la direction du couvercle (6), et
- comprend au moins un élément de maintien (11, 21, 32), qui s'étend en oblique vers le bas, c'est-à-dire en oblique dans la direction opposée à la direction du couvercle (6), et
- les deux éléments de maintien (10, 11 ; 20, 21 ; 31, 32) sont fixés sur le générateur de gaz (2) ou sur une portion du module d'airbag (28, 29) associée au générateur de gaz (2), et s'appuient de manière permanente sur l'autre groupe structurel respectif, c'est-à-dire sur la portion associée du module d'airbag (12, 13) respectivement sur le générateur de gaz (2).

2. Module d'airbag selon la revendication 1, **caractérisé en ce qu'**il est prévu plusieurs groupes structurels élastiques (9) semblables à des segments.

3. Module d'airbag selon la revendication 1 ou 2, **caractérisé en ce qu'**il est prévu au moins trois groupes structurels élastiques (9).

4. Module d'airbag selon la revendication 2 ou 3, **caractérisé en ce que** les groupes structurels élastiques (9) sont agencés les uns par rapport aux autres selon un même espacement angulaire.

5. Module d'airbag selon la revendication 1, **caractérisé en ce qu'**il est prévu un groupe structurel élastique (8) de forme annulaire.

6. Module d'airbag selon l'une au moins des revendications précédentes, **caractérisé en ce que** les éléments de maintien (10, 11, 20, 21, 31, 32) présentent une section transversale en forme de doigt.

7. Module d'airbag selon l'une au moins des revendications précédentes, **caractérisé en ce que** les groupes structurels élastiques (8, 9, 30) présentent en section transversale une forme en Y, les branches obliques du Y constituant les éléments de maintien (10, 11, 31, 32).

8. Module d'airbag selon la revendication 7, **caractérisé en ce que** le groupe structurel élastique (8, 9, 30) est agencé dans la partie inférieure du générateur de gaz (2), et la portion inférieure (35) du Y, habituellement verticale, s'étend dans le plan d'un support de générateur de gaz (12, 28) ou parallèlement à ce plan, et une portion en oblique du Y constitue l'élément de maintien (10, 31) qui s'étend en oblique vers le haut, et l'autre portion en oblique du Y constitue l'élément de maintien (11, 32) qui s'étend en oblique vers le bas.

9. Module d'airbag selon l'une au moins des revendications précédentes, **caractérisé en ce que** l'élément de maintien (10) qui s'étend en oblique vers le haut s'engage dans un renfoncement (16) du support de générateur (12), et l'élément de maintien (11) qui s'étend en oblique vers le bas s'engage dans un renfoncement (17) d'une plaque de maintien (13) reliée au support de générateur (12).

10. Module d'airbag selon l'une au moins des revendications précédentes, **caractérisé en ce que** le groupe structurel élastique (8, 9) est fixé à au moins une bride (7) reliée au générateur de gaz (2).

11. Module d'airbag selon l'une au moins des revendications précédentes, **caractérisé en ce que** le groupe structurel élastique (8, 9, 18, 30) est réalisé en caoutchouc ou en silicone.

12. Module d'airbag selon l'une au moins des revendications précédentes, **caractérisé en ce que** le groupe structurel élastique (8, 9) est réalisé par injection sur le générateur de gaz (2) et/ou sur la bride (7) reliée à celui-ci.

13. Module d'airbag selon la revendication 7 ou 8, **caractérisé en ce que** le groupe structurel élastique (30) est relié au support de générateur (28), et **en ce que** les branches obliques (31, 32) du Y s'engagent dans au moins un évidement (33) prévu sur le générateur de gaz. (2).

14. Module d'airbag selon l'une au moins des revendications 1 à 6 et au 11, **caractérisé en ce qu'**il est prévu au moins un élément de maintien (20, 21) dans la région supérieure et dans la région inférieure du générateur de gaz (2).

15. Module d'airbag selon l'une au moins des revendications 1 à 6 et 11 et 14, **caractérisé en ce que** les éléments de maintien (20, 21) sont fixées sur le générateur de gaz, **en ce que** l'élément de maintien agencé dans la région supérieure du générateur de gaz est appliqué contre un boîtier (26, 27) qui entoure le générateur de gaz (2), et **en ce que** l'élément de maintien (21) agencé dans la région inférieure du générateur de gaz est appliqué contre ledit boîtier (26) et contre une plaque de maintien (22).

16. Module d'airbag selon l'une au moins des revendications 1 à 6, 11, 14 et 15, **caractérisé en ce qu'**il est prévu un boîtier diffuseur (23) à titre de boîtier.

17. Module d'airbag selon l'une au moins des revendications 1 à 6, 11, 14, 15 et 16, **caractérisé en ce que** le groupe structurel élastique (18) est susceptible de recouvrir le générateur de gaz (2).

18. Module d'airbag selon l'une au moins des revendications précédentes, **caractérisé en ce qu'**un câble de mise à la terre flexible est agencé entre le générateur de gaz (2) et un groupe structurel métallique relié au véhicule.
